# EUROPEAN PATENT SPECIFICATION

(11) **EP 2 881 567 B1**
(45) Date of publication and mention of the grant of the patent: **13.11.2019**
(21) Application number: 14195524.5
(22) Date of filing: 28.11.2014
(51) Int. Cl.: F02D 41/14, G01N 27/417, G01N 15/06

(54) **Particulate sensor and method of operation**
Partikelsensor und Verfahren zum Betrieb
Capteur de particules et procédé de fonctionnement

(30) Priority: 04.12.2013 US 201314096373
(43) Date of publication of application: 10.06.2015
(73) Proprietor: Delphi Technologies IP Limited, St. Michael (BB)
(72) Inventor: Goulette, David A., Marine City, MI 48039 (US); Hocken, Lary R., Davison, MI 48423 (US)
(74) Representative: Delphi France SAS

(56) References cited:
- EP-A1- 2 407 773
- EP-A1- 2 492 481
- DE-A1-102008 031 648
- US-A1- 2009 019 918
- US-A1- 2009 056 416
- US-A1- 2009 090 622
- US-A1- 2011 197 571
- Hannu Jääskeläinen: "Diesel Exhaust Gas", , 1 January 2011 (2011-01-01), XP055179781, Retrieved from the Internet: URL:https://www.dieselnet.com/tech/diesel_ exh.php [retrieved on 2015-03-27]

## Description

### TECHNICAL FIELD

This disclosure generally relates to an exhaust particulate sensor, and more particularly relates to heating the sensor during certain conditions to reduce thermophoretic accumulation of particulates on the sensor.

### BACKGROUND OF INVENTION

Particulate Matter (PM) sensors are used in exhaust systems of many diesel engines to diagnose the operational status of a Diesel Particulate Filter (DPF). Typically, the sensor has adjacent electrodes that define a gap, and particulates accumulate in a gap in between the electrodes. Since the particulates are generally conductive, the measured resistance between the electrodes of the sensor will decrease as particulates accumulate. If the DPF is allowing too many particulates to pass, the rate that particulates will accumulate in the gap will increase.

While not subscribing to any particular theory, there are believed to be three main mechanisms by which particulates accumulate on the sensor: electrophoretic, thermophoretic, and direct impact. The electrophoretic accumulation is caused by a voltage applied across the electrodes that attracts charged particulates. If this voltage is increased, the rate of accumulation of particulates generally increases. The thermophoretic effect generally occurs when the surface temperature of the sensor is lower than the particulate or exhaust temperature 52. Direct impact is a mechanical accumulation of particulates that impact on the sensor. Typically, prior to operating the sensor to accumulate particulates, the sensor is heated to a sensor temperature effective to burn-off all or most of the particulates. In this manner the test is initiated from a known condition. It is preferable that the rates which particulates accumulate on the sensor by these three mechanisms are the same each time particulates are accumulated so the rate of particulate accumulation is relatively constant.

If the sensor temperature of the sensor is less than the dew-point of the exhaust gas, it is undesirable to collect particulates by way of electrophoretic accumulation as condensation may cause the accumulated particulates to be wet or otherwise contaminated, and thereby be more conductive than normal. This can lead to an erroneous particulate level reading. If the voltage necessary for electrophoretic accumulation is not applied, accumulation of particulates can still occur by way of the thermophoretic and impact mechanisms. However, as the rate of particulate accumulation by only the thermophoretic and impact mechanisms is relatively slow, the rate at which particulates accumulate may be too slow, i.e. the response time of the sensor can be affected.. The prior art is described in US2009/090622A1, US2009/0564416 A1 and US2009/019918 A1

### SUMMARY OF THE INVENTION

In accordance with one embodiment, a particulate sensing system configured to detect particulates in exhaust gas from a combustion process is provided. The system includes a first electrode, a second electrode, a heater element, and a processor. The second electrode is spaced apart from the first electrode. The particulates are detected based on electrical conductivity between the first electrode and the second electrode. The heater element is configured to heat the first electrode and the second electrode. The first electrode, the second electrode, and the heater element cooperate to form a sensor. The processor is configured to operate the heater element to establish a sensor temperature greater than a dew-point temperature of the exhaust gas and less than a burn-off temperature of the sensor to reduce thermophoretic accumulation of particulates on the sensor.

The processor is further configured to apply a zero-bias voltage across the first electrode and the second electrode if an exhaust temperature of the exhaust gas is less than the dew-point temperature. The processor is further configured to apply a zero-bias voltage across the first electrode and the second electrode if the sensor temperature is greater than the exhaust temperature of the exhaust gas. The processor is further configured to apply an electrophoretic voltage across the first electrode and the second electrode if an exhaust temperature of the exhaust gas is greater than the dew-point temperature and the sensor temperature is less than the exhaust temperature.

In another embodiment not part to the invention, a controller for a particulate sensing system configured to detect particulates in exhaust gas from a combustion process is provided. The system includes a sensor that includes a first electrode, a second electrode spaced apart from the first electrode, and a heater element configured to heat the first electrode and the second electrode. The particulates are detected based on electrical conductivity between the first electrode and the second electrode. The controller includes a processor configured to operate the heater element to establish a sensor temperature greater than a dew-point temperature of the exhaust gas and less than a burn-off temperature of the sensor to reduce thermophoretic accumulation of particulates on the sensor. The sensor temperature to reduce thermophoretic accumulation of particulates on the sensor is between 10°C and 100°C greater than an exhaust temperature of the exhaust gas. The controller is further configured to apply a zero-bias voltage across the first electrode and the second electrode if an exhaust temperature of the exhaust gas is less than the dew-point temperature. The controller is further configured to apply a zero-bias voltage across the first electrode and the second electrode if the sensor temperature is greater than an exhaust temperature. The controller is further configured to apply an electrophoretic voltage across the first electrode and the second electrode if an exhaust temperature of the exhaust gas is greater than the dew-point temperature and the sensor temperature is less than the exhaust temperature.

The invention extends to a method of operating a particulate sensing system as described above,the method including operating the heater element to establish a sensor temperature greater than a dew-point temperature of the exhaust gas and less than a burn-off temperature of the sensor to reduce thermophoretic accumulation of particulates on the sensor. The method further comprises applying a zero-bias voltage across the first electrode and the second electrode if an exhaust temperature of the exhaust gas is less than the dew-point temperature and, applying a zero-bias voltage across the first electrode and the second electrode if the sensor temperature is greater than an exhaust temperature. The method further comprises applying an electrophoretic voltage across the first electrode and the second electrode if an exhaust temperature of the exhaust gas is greater than the dew-point temperature and the sensor temperature is less than the exhaust temperature.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a diagram of a particulate sensing system in accordance with one embodiment;
Fig. 2 is a schematic of part of the system of Fig. 1 in accordance with one embodiment;
Fig. 3 is an exploded view of a sensor suitable for use by the system of Fig. 1 in accordance with one embodiment; and
Fig. 4 is a flowchart of a method suitable for execution by the system of Fig. 1 in accordance with one embodiment.

### DESCRIPTION OF THE PREFERRED EMBODIMENT

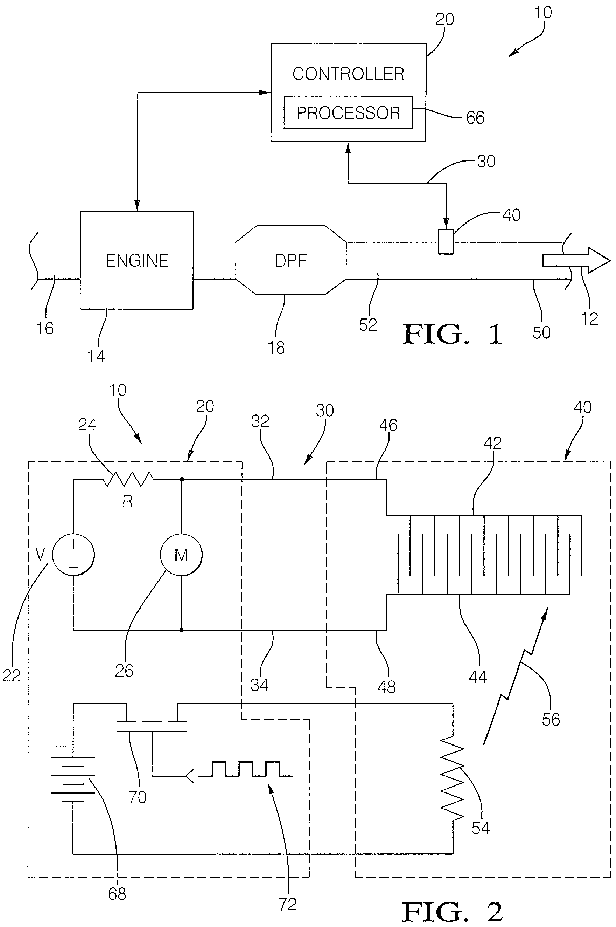

Fig. 1 illustrates a non-limiting example of a particulate sensing system, hereafter referred to as the system 10. In general, the system is configured to detect particulates in an exhaust gas 12 from a combustion process. In this non-limiting example the combustion process is the operation of an internal combustion engine, hereafter referred to as the engine 14. However, it is recognized that the combustion process could be the burning of coal or other fuels in an industrial oven, boiler, reactor, or the like. The configuration of the engine 14 shown in Fig. 1 is not particularly limited. The engine 14 may include a plurality of cylinders (two or more cylinders, for example, four cylinders or six cylinders) that are arranged in various ways (e.g., in-line or V-type) as will be recognized by those in the art.

An intake port of the internal combustion engine 14 is in fluidic communication with an intake 16. The intake 16 is provided as needed, for instance, with various pipes (not shown), such as an intake pipe and an intake manifold, and various intake sensors (not shown), such as an intake pressure sensor, an intake temperature sensor, and an air flow meter. An exhaust port of the internal combustion engine 14, on the other hand, is in communication through an exhaust manifold with a diesel particulate filter, hereafter referred to as the DPF 18. The DPF 18 is generally configured to collect particulate matter in the burned gas produced by the engine's internal combustion process and discharged by the engine 14.

A pipe 50 is installed downstream of the DPF 18 and in fluidic communication with the DPF 18. The exhaust gas 12 passing out of the DPF 18 flows into the pipe 50. A particulate matter sensor, hereafter referred to as the sensor 40 is disposed in the pipe 50. As the sensor 40 is positioned downstream of the DPF 18, it is in a position to detect the amount of particulate matter in the exhaust gas downstream of the DPF 18. The sensor 40 is connected to a controller 20 which is generally configured to operate the sensor 40 to determine an amount of particulate matter in the exhaust gas 12.

The controller 20 may include a processor 66 such as a microprocessor or other control circuitry such as analog and/or digital control circuitry including an application specific integrated circuit (ASIC) for processing data as should be evident to those in the art. The controller 20 may include memory (not show), including non-volatile memory, such as electrically erasable programmable read-only memory (EEPROM) for storing one or more routines, thresholds and captured data. The memory may be part of the processor 66. The one or more routines may be executed by the processor 66 to perform steps for operating the sensor 40 as described herein.

The controller 20 may also be configured to control the operation of the engine 14. It is recognized that the operation of the engine 14 and the operation of the sensor 40 could be separated into distinct housings located at different locations of the system 10. These functions are combined into a single entity only to simplify the illustration and explanation. A characteristic of the exhaust gas 12 is an exhaust temperature 52. The exhaust temperature 52 may be determined by direct measurement using a temperature sensor (not shown), or may be estimated based on the operating duration and operating condition of the engine. For example, if the engine 14 has been operating at a high load for a relatively long time, the exhaust temperature may be estimated by the controller 20 to be relatively high, e.g. more than 100°C greater than ambient. In contrast, if the engine 14 has been recently started, or has been idling for a long time, especially if the engine 14 is a diesel engine, the exhaust gas may be relatively low, e.g. less than 20°C greater than ambient.

Fig. 2 illustrates a non-limiting example of a partial electrical schematic of the system 10. The illustration may be generally considered as partitioned as indicated into the controller 20, a wiring harness 30, and the sensor 40 as shown in Fig. 1. The controller 20 includes an impedance measurement means for measuring the impedance of a circuit connected thereto. In this example, the impedance measurement means includes a voltage source 22 that provides a voltage V, a pull-up resistor 24 having a resistance value R, and a voltage measurement means 26. While voltage source 22 is depicted as a direct current (DC) source with a given polarity, it will be appreciated that voltage source 22 can alternatively be an alternating current (AC) source, a DC source having opposite polarity from what is depicted, or a source providing both an AC and a DC voltage component, without departing from the inventive concept described herein.

The controller 20 electrically generally interfaces with the sensor 40 via the wiring harness 30. The wiring harness 30 includes conductors 32, 34, 36, and 38. While four distinct conductors are shown, it is recognized that the number could be reduced by, for example, combining conductors 34 and 38 to form a common ground. The sensor 40 includes a first electrode 42 electrically connected by conductor 46 to conductor 32, and a second electrode 44 electrically connected by conductor 48 to conductor 34. The first electrode 42 and the second electrode are spaced apart so that the presence of particulates can be detected based on electrical conductivity between the first electrode and the second electrode as measured by the impedance measurement means described greater than.

As formed, the first electrode 42 is electrically isolated from the second electrode 44 so that in the absence of particulate matter the circuit formed by the two electrodes measures electrically as an open circuit. As such, in the absence of particulate matter the voltage measured by measurement means 26 will detect a voltage essentially equal to the voltage provided by voltage source 22. In operation, particulate matter that is deposited on or accumulates on the gap between the electrodes can be detected because the particulate matter forms a conductive path bridging the normally open circuit between the electrodes. As particulate matter accumulates between the first electrode 42 and the second electrode 44, the resistance therebetween will decrease, and the voltage detected by the measurement means 26 will decrease from the value provided by voltage source 22. The controller 20 can thereby determine an indication of the amount of particulate matter based on the voltage measured by the measurement means 26.

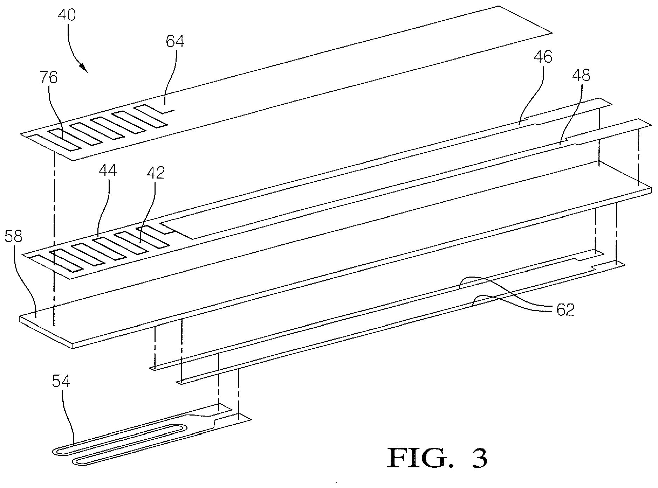

Fig. 3 is a non-limiting example of an exploded perspective view of one possible embodiment of the sensor 40. The sensor 40 may include an electrically insulating substrate 58. While shown as a single layer, it will be appreciated that substrate 58 may be formed by laminating together a plurality of layers. Conductive material disposed on one surface of substrate 58 is patterned to form conductors 46 and 48, the first electrode 42, and the second electrode 44. A protective layer 64 may also be included to protect the conductive material that forms the first electrode 42 and the second electrode 44, as well as portions of the conductors 46, 48 that may be exposed to abrasive particles in the gas stream being measured. The protective layer 64 includes an open area 76 exposing the gap between the first electrode 42 and the second electrode 44 to allow particulate matter to bridge the gap between the first electrode 42 and the second electrode 44.

The sensor 40 may also include a heater element 54 that is operable to raise the temperature in the vicinity of the first electrode 42 and the second electrode 44. Raising the temperature of the sensor 40 to a so called burn-off temperature or restoration temperature will result in the particulate matter being removed from the surface of the sensing element, thereby restoring the resistance of the area between the first electrode 42 and the second electrode 44 to a relatively high resistance or essentially an open circuit condition. The heater element 54 in this non-limiting example is on the opposite surface of the substrate 58 from the first electrode 42 and the second electrode 44. The heater element 54 is positioned to allow the heater element 54 to clean the particulate matter from the gap between the first electrode 42 and the second electrode 44 when the heater 160 is electrically powered by supplying current through the heater leads 62.

For a particulate matter sensor located downstream from a diesel particulate filter (DPF), the rate of soot accumulation may provide diagnostic information related to a failure of the diesel particulate filter. Additionally, information regarding the total amount of soot accumulated on the sensor may be used to initiate regeneration of the sensor. The term "regeneration" as used herein refers to the process of heating the sensor 40 so as to raise the temperature of the sensor 40 to a level sufficient to effect the 'burn-off' or removal of particulate matter from the surface of the sensor 40, thereby restoring the sensor 40 to a high impedance condition.

Described so far is a particulate sensing system (the system 10) configured to detect particulates in exhaust gas 12 from a combustion process such as internal combustion in a diesel engine (the engine 14). The system 10 includes the first electrode 42 and the second electrode 44 spaced apart from the first electrode 42. The accumulation of particulates is detected based on electrical conductivity between the first electrode 42 and the second electrode 44. The system 10 also includes the heater element 54 configured to heat the first electrode 42 and the second electrode 44. The first electrode 42, the second electrode 44, and the heater element 54 cooperate to form the sensor 40.

Described herein is a way to improve the accuracy of the sensor 40 by preventing or reducing the accumulation of particulates due to thermophoretic effect when particulate accumulation is not desired. It has been observed that when the sensor temperature is near or greater than the exhaust temperature 52, the thermophoretic effect can be reduced or removed. Data has shown that increasing the sensor temperature to greater than the exhaust temperature 52, and in particular to a sensor temperature greater than dew-point temperature of the exhaust gas 12, the accumulating of particulates due to the thermophoretic effect can be drastically reduced. As such, it is proposed to operate the heater element 54 to establish a sensor temperature greater than a dew-point temperature of the exhaust gas 12 and less than a burn-off temperature or regeneration temperature of the sensor 40 to reduce thermophoretic accumulation of particulates on the sensor.

The heater element 54 is normally configured to achieve the burn-off temperature when a battery voltage 68 is applied to the heater element 54 at a relatively high duty cycle, 80% duty cycle for example. Power from the battery voltage 68 may be controlled by a switch 70. To control the sensor temperature to a value less than the burn-off temperature, the switch 70 may be modulated by a pulse-width-modulation (PWM) signal 72, as will be recognized by those in the art. By way of example and not limitation, the sensor temperature may be increased to a value of 10°C to 100°C greater than an exhaust temperature 52 of the exhaust. By pulse-width-modulating the switch 70, the power applied to the heater element 54 can be reduced to keep the sensor temperature below the burn-off temperature, but the thermophoretic effect can be reduced or eliminated thus removing accumulation of particulates when it is not desirable. By eliminating both electrophoretic and thermophoretic accumulation, the two main mechanisms for particulate accumulation, accumulation can effectively be stopped when conditions are such that accumulation is not desirable. Without the ability to turn off both mechanisms, extended periods of time spent in regions where accumulation is not desirable cannot be tolerated, and the sensor response time can be affected resulting in having to restart the particulate accumulation cycle.

Accordingly, the processor 66 may be further configured to apply a zero-bias voltage across the first electrode and the second electrode if an exhaust temperature 52 of the exhaust is less than the dew-point temperature. This will help prevent undesirable accumulation of wet or contaminated particulates via the electrophoretic mechanism. As used herein, a zero-bias voltage may be actively applied by actively shorting the first electrode 42 to the second electrode 44 through a shorting switch (not shown) or by providing a resistor between the first electrode 42 to the second electrode 44 either on the sensor 40 or in the controller 20.

If the exhaust temperature 52 increases to a value greater than the dew-point temperature of the exhaust, the switch 70 can be turned off to allow the sensor temperature to decrease to value less than the exhaust temperature 52. As the sensor 40 is thermally coupled to ambient air, that is, a portion of the sensor is outside of the pipe 50, if the heater element 54 is not dissipating heat, the sensor temperature will naturally decrease to a value less than the exhaust temperature 52. Once the sensor temperature is less than the exhaust temperature 52, thermophoretic accumulation of particulates will occur. As such, the processor 66 (or the controller 20) is preferably configured to apply a zero-bias voltage across the first electrode 42 and the second electrode 44 if the sensor temperature is greater than an exhaust temperature 52 of the exhaust gas 12.

It follows that the processor 66 is also preferably configured to apply an electrophoretic voltage across the first electrode 42 and the second electrode 44 if the exhaust temperature 52 of the exhaust gas 12 is greater than the dew-point temperature of the exhaust gas 12, and the sensor temperature is less than the exhaust temperature 52. That is, the sensor 40 is operated to avoid electrophoretic accumulation until conditions are right for thermophoretic accumulation.

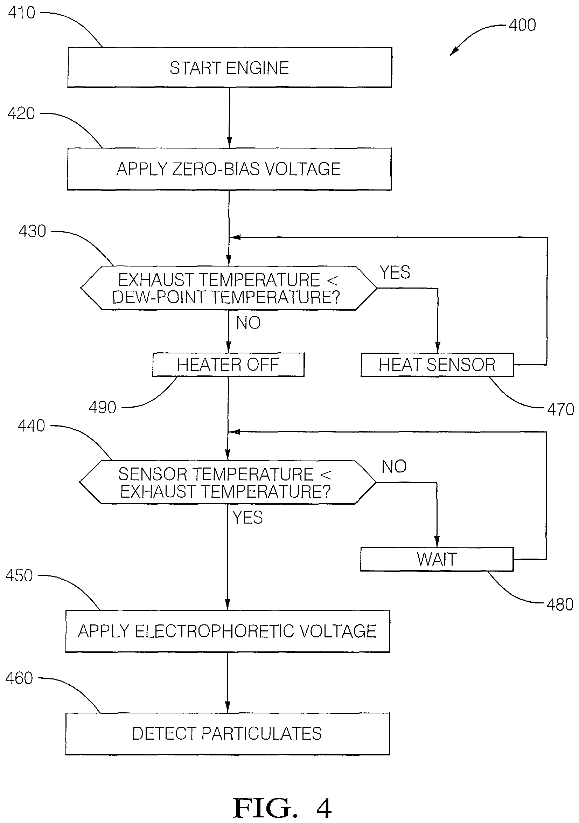

Fig. 4 illustrates a non-limiting example of a method 400 of operating a particulate matter sensor (the sensor 40) configured to detect particulates in the exhaust gas 12 from a combustion process, for example from the operation of a diesel engine (the engine 14).

Step 410, START ENGINE, may include initializing the controller 20 by receiving signals from a variety of known engine sensors (not shown) to determine if the engine is cold or relatively warm because it was recently turned off. This initialization of the controller 20 may be used to determine how long the engine must run before operating the sensor 40 as described below.

Step 420, APPLY ZERO BIAS VOLTAGE, may include the controller 20 actively shorting the first electrode 42 to the second electrode 44 by, for example, setting the voltage source 22 to zero volts, thereby effectively replacing the voltage source 22 with a dead short. By applying a zero-bias voltage to the sensor 40, electrophoretic accumulating of particulates is reduced or inhibited. Alternatively, the sensor 40 may include a resistor (not shown) that electrically couples the first electrode 42 to the second electrode 44 to establish a zero-bias voltage if the controller 20 merely disconnects from the sensor 40.

Step 430, EXHAUST TEMPERATURE < DEW-POINT TEMPERATURE?, may include, the controller receiving an indication of the exhaust temperature 52 from an exhaust temperature sensor, or estimating the exhaust temperature 52 based on, for example, coolant temperature, engine load, and engine run time a the engine load. If the exhaust temperature 52 is not less than the dew-point temperature of the exhaust gas 12, the method 400 takes the NO logic path and proceeds to step 490. The dew-point of the exhaust gas 12 may be estimated based on ambient air temperature, ambient humidity, engine load, or other parameters that influence how much moisture or unburned fuel is present in the exhaust gas 12.

If YES, the method 400 proceeds to step 470, HEAT SENSOR, that may include applying the PWM signal 72 to the switch 70 in order heat the sensor 40 to a sensor temperature greater than a dew-point temperature of the exhaust gas 12 and less than a burn-off temperature (e.g. 200°C) of the sensor to reduce thermophoretic accumulation of particulates on the sensor. Preferably, the sensor temperature used to reduce thermophoretic accumulation of particulates on the sensor 40 is between 10°C and 100°C greater than the exhaust temperature 52 of the exhaust gas 12. Testing has suggested that a sensor temperature 30°C greater than the exhaust temperature 52 may be a good compromise between minimizing thermophoretic accumulation and minimizing the sensor temperature. After step 470, the method 400 loops back to step 430 so heating of the sensor 40 continues until the exhaust temperature 52 is not less than the dew-point temperature of the exhaust gas 12.

Step 490, HEATER OFF, may be executed if the heater element 54 has been heated by step 470 to assure that the heater element 54 is no longer generating heat.

Step 440, SENSOR TEMPERATURE < EXHAUST TEMPERATURE?, may include estimating the sensor temperature based on the amount of power that was provided to the heater element 54, or directly measuring the sensor temperature via a temperature sensor (not shown) on the sensor 40, or by measuring the resistance of the heater element 54 via a resistance measuring means (not shown). If the sensor 40 had been heated because step 470 was executed, it would be advantageous for the sensor 40 to cool down to a sensor temperature were thermophoretic accumulation will occur. As noted above, since the sensor 40 is thermally coupled to ambient air outside of the pipe 50, the sensor temperature will generally be less than the exhaust temperature 52. Testing has indicated that it is preferable to have the sensor temperature at least 5°C below the exhaust temperature 52, but not below the dew-point temperature of the exhaust gas 12. As such, if NO, the method 400 proceeds to step 480, WAIT, which may include pausing the method 400 for a brief time (e.g. 1 second) before looping back to again execute step 440. Otherwise, if YES, the method proceeds to step 450.

Step 450, APPLY ELECTROPHORETIC VOLTAGE, may include activating the voltage source 22 to apply a suitable voltage to enable electrophoretic accumulation of particulates on the sensor 40. Application of the electrophoretic voltage is advantageously delayed until the sensor temperature is suitable for both thermophoretic accumulation and electrophoretic accumulation so the detection of particulates is more predictable.

Step 460, DETECT PARTICULATES, may include measuring the voltage from the first electrode 42 to the second electrode 44, and comparing that measured voltage to the voltage output by the voltage source 22 to determine a resistance value or conductivity value of the electrical resistance/conductivity between the first electrode 42 to the second electrode 44.

Accordingly, a particulate sensing system (the system 10), a controller 20 for the system 10, and a method 400 to detect particulates in exhaust gas 12 from a combustion process is provided. Electrophoretic accumulation is controlled by controlling the electrophoretic voltage applied across the first electrode 42 to the second electrode 44. Thermophoretic accumulation is controlled by controlling the sensor temperature. The accuracy and reliability of detecting particulates in the exhaust gas 12 is improved by coordinating the electrophoretic accumulation and the thermophoretic accumulation to be initiated at about the same time.

While this invention has been described in terms of the preferred embodiments thereof, it is not intended to be so limited, but rather only to the extent set forth in the claims that follow.

## Claims

1. A particulate sensing system (10) configured to detect particulates in exhaust gas (12) from a combustion process, said system (10) comprising:
a first electrode (42);
a second electrode (44) spaced apart from the first electrode (42), wherein particulates are detected based on electrical conductivity between the first electrode (42) and the second electrode (44);
a heater element (54) configured to heat the first electrode (42) and the second electrode (44), wherein the first electrode (42), the second electrode (44), and the heater element (54) cooperate to form a sensor (40); and
a processor (66) configured to operate the heater element (54) to establish a sensor (40) temperature greater than a dew-point temperature of the exhaust gas (12) and less than a burn-off temperature of the sensor (40) to reduce thermophoretic accumulation of particulates on the sensor (40),
**characterized in that**
the processor (66) is further configured to apply a zero-bias voltage across the first electrode (42) and the second electrode (44) if the exhaust temperature (52) of the exhaust gas (12) is less than the dew-point temperature and,
wherein the processor (66) is further configured to apply a zero-bias voltage across the first electrode (42) and the second electrode (44) if the sensor (40) temperature is greater than the exhaust temperature (52) of the exhaust gas (12).

2. The system (10) in accordance with claim 1, wherein the processor (66) is further configured to apply an electrophoretic voltage across the first electrode (42) and the second electrode (44) if the exhaust temperature (52) of the exhaust gas (12) is greater than the dew-point temperature and the sensor (40) temperature is less than the exhaust temperature (52).

3. A method (400) of operating a particulate sensing system (10) as claimed in anyone of the preceding claims, said method (400) comprising:
operating (430, 440, 470, 480, 490) the heater element (54) to establish a sensor (40) temperature greater than a dew-point temperature of the exhaust gas (12) and less than a burn-off temperature of the sensor (40) to reduce thermophoretic accumulation of particulates on the sensor (40),
applying (420) a zero-bias voltage across the first electrode (42) and the second electrode (44) if (430) the exhaust temperature (52) of the exhaust gas (12) is less than the dew-point temperature and,
applying (420) a zero-bias voltage across the first electrode (42) and the second electrode (44) if (440) the sensor (40) temperature is greater than the exhaust temperature (52) of the exhaust gas (12).

4. The method (400) in accordance with claim 3, wherein the method (400) further comprises
applying (450) an electrophoretic voltage across the first electrode (42) and the second electrode (44) if the exhaust temperature (52) of the exhaust gas (12) is greater than the dew-point temperature and the sensor (40) temperature is less than the exhaust temperature (52).

## Patentansprüche

1. Partikelerfassungssystem (10), das konfiguriert ist zum Erfassen von Partikeln in Abgas (12) aus einem Verbrennungsprozess, wobei das System (10) aufweist:
eine erste Elektrode (42);
eine zweite Elektrode (44), die von der ersten Elektrode (42) beabstandet ist, wobei Partikel basierend auf einer elektrischen Leitfähigkeit zwischen der ersten Elektrode (42) und der zweiten Elektrode (44) erfasst werden;
ein Heizelement (54), das konfiguriert ist zum Erwärmen der ersten Elektrode (42) und der zweiten Elektrode (44), wobei die erste Elektrode (42), die zweite Elektrode (44) und das Heizelement (54) zusammenwirken, um einen Sensor zu bilden (40); und
einen Prozessor (66), der konfiguriert ist zum Betreiben der Heizelements (54), um eine Temperatur des Sensors (40) einzustellen, die höher als eine Taupunkttemperatur des Abgases (12) und niedriger als eine Abbrenntemperatur des Sensors (40) ist, um eine thermophoretische Ansammlung von Partikeln auf dem Sensor (40) zu reduzieren,
**dadurch gekennzeichnet, dass**
der Prozessor (66) weiter konfiguriert ist zum Anlegen einer Nullvorspannung über die erste Elektrode (42) und die zweite Elektrode (44), wenn die Abgastemperatur (52) des Abgases (12) niedriger ist als die Taupunkttemperatur, und
wobei der Prozessor (66) weiter konfiguriert ist zum Anlegen einer Nullvorspannung über die erste Elektrode (42) und die zweite Elektrode (44), wenn die Temperatur des Sensors (40) höher ist als die Abgastemperatur (52) des Abgases (12).

2. Das System (10) gemäß Anspruch 1, wobei der Prozessor (66) weiter konfiguriert ist zum Anlegen einer elektrophoretischen Spannung über die erste Elektrode (42) und die zweite Elektrode (44), wenn die Abgastemperatur (52) des Abgases (12) höher ist als die Taupunkttemperatur und die Temperatur des Sensors (40) niedriger ist als die Abgastemperatur (52).

3. Ein Verfahren (400) zum Betreiben eines Partikelerfassungssystems (10) gemäß einem der vorhergehenden Ansprüche, wobei das Verfahren (400) aufweist:
Betreiben (430, 440, 470, 480, 490) des Heizelements (54), um eine Temperatur des Sensors (40) festzulegen, die höher ist als eine Taupunkttemperatur des Abgases (12) und niedriger ist als eine Abbrenntemperatur des Sensors (40), um eine thermophoretische Ansammlung von Partikeln auf dem Sensor (40) zu reduzieren,
Anlegen (420) einer Nullvorspannung über die erste Elektrode (42) und die zweite Elektrode (44), wenn (430) die Abgastemperatur (52) des Abgases (12) niedriger ist als die Taupunkttemperatur, und
Anlegen (420) einer Nullvorspannung über die erste Elektrode (42) und die zweite Elektrode (44), wenn (440) die Temperatur des Sensors (40) höher ist als die Abgastemperatur (52) des Abgases (12).

4. Das Verfahren (400) gemäß Anspruch 3, wobei das Verfahren (400) weiter aufweist
Anlegen (450) einer elektrophoretischen Spannung über die erste Elektrode (42) und die zweite Elektrode (44), wenn die Abgastemperatur (52) des Abgases (12) höher ist als die Taupunkttemperatur und die Temperatur des Sensors (40) niedriger ist als die Abgastemperatur (52).

## Revendications

1. Système capteur de particules (10) configuré pour détecter des particules dans des gaz d'échappement (12) provenant d'un processus de combustion, ledit système (10) comprenant :
une première électrode (42) ;
une seconde électrode (44) espacée de la première électrode (42),
dans lequel des particules sont détectées sur la base d'une conductivité électrique entre la première électrode (42) et la seconde électrode (44) ;
un élément chauffant (54) configuré pour chauffer la première électrode (42) et la seconde électrode (44), dans lequel la première électrode (42), la seconde électrode (44), et l'élément chauffant (54) coopèrent pour former un capteur (40) ; et
un processeur (66) configuré pour faire fonctionner l'élément chauffant (54) afin d'établir une température de capteur (40) plus élevée qu'une température de point de rosée des gaz d'échappement (12) et plus faible qu'une température de grillage du capteur (40) afin de réduire une accumulation par thermophorèse de particules sur le capteur (40),
**caractérisé en ce que**
le processeur (66) est en outre configuré pour appliquer une tension de polarisation nulle aux bornes de la première électrode (42) et de la seconde électrode (44) si la température d'échappement (52) des gaz d'échappement (12) est inférieure à la température de point de rosée, et
dans lequel le processeur (66) est en outre configuré pour appliquer une tension de polarisation nulle aux bornes de la première électrode (42) et de la seconde électrode (44) si la température du capteur (40) est plus élevée que la température d'échappement (52) des gaz d'échappement (12).

2. Système (10) selon la revendication 1, dans lequel le processeur (66) est en outre configuré pour appliquer une tension d'électrophorèse aux bornes de la première électrode (42) et de la seconde électrode (44) si la température d'échappement (52) des gaz d'échappement (12) est plus élevée que la température de point de rosée et la température du capteur (40) est inférieure à la température d'échappement (52).

3. Procédé (400) de fonctionnement d'un système capteur de particules (10) selon l'une quelconque des revendications précédentes, ledit procédé (400) comprenant les étapes consistant à :
faire fonctionner (430, 440, 470, 480, 490) l'élément chauffant (54) pour établir une température de capteur (40) plus élevée qu'une température de point de rosée des gaz d'échappement (12) et inférieure à une température de grillage du capteur (40) pour réduire l'accumulation par thermophorèse de particules sur le capteur (40),
appliquer (420) une tension de polarisation nulle aux bornes de la première électrode (42) et de la seconde électrode (44) si (430) la température d'échappement (52) des gaz d'échappement (12) est inférieure à la température de point de rosée, et
appliquer (420) une tension de polarisation nulle aux bornes de la première électrode (42) et de la seconde électrode (44) si (440) la température du capteur (40) est plus élevée que la température d'échappement (52) des gaz d'échappement (12).

4. Procédé (400) selon la revendication 3, dans lequel le procédé (400) comprend en outre l'étape consistant à
appliquer (450) une tension d'électrophorèse aux bornes de la première électrode (42) et de la seconde électrode (44) si la température d'échappement (52) des gaz d'échappement (12) est plus élevée que la température de point de rosée et la température du capteur (40) est inférieure à la température d'échappement (52).
